# EUROPÄISCHE PATENTANMELDUNG

(11) **EP 4 268 992 A1**
(43) Veröffentlichungstag der Anmeldung: **01.11.2023**
(21) Anmeldenummer: 22170568.4
(22) Anmeldetag: 28.04.2022
(51) Int. Cl.: B21F 23/00, B21F 27/10, B21F 27/20

(54) **EINRICHTUNG ZUR EINSTELLUNG EINER BESTIMMTEN BETRIEBSPOSITION EINER VORRICHTUNGSKOMPONENTE UND VERFAHREN HIERZU**

(71) Anmelder: EVG Entwicklungs- u. Verwertungs- Gesellschaft m.b.H., 8074 Raaba (AT)
(72) Erfinder: POTOCNIK, Wolfgang, 8262 IlZ (AT)
(74) Vertreter: Wirnsberger & Lerchbaum Patentanwälte OG

(57) **Zusammenfassung**

Die Erfindung betrifft eine Einrichtung (1) zur Einstellung einer bestimmten Betriebsposition einer Vorrichtungskomponente (2) wie einer Drahtzuführung einer Schweißanlage (3), wobei die Vorrichtungskomponente (2) zur Einstellung der bestimmten Betriebsposition bewegbar, insbesondere verschiebbar, und nach Bewegung in die bestimmte Betriebsposition in dieser für einen Betrieb fixierbar ist. Erfindungsgemäß umfasst die Einrichtung (1):
- ein Positionierelement (4), das eine veränderbare Oberfläche (5) aufweist, auf welcher die bestimmte Betriebsposition für den Betrieb vorgegeben werden kann;
- eine Einstellhilfe (8), die zumindest einen mit der veränderbaren Oberfläche (5) des Positionierelementes (4) zusammenwirkenden Bereich aufweist und die zur Anlage an der Vorrichtungskomponente (2) ausgebildet ist.

Des Weiteren betrifft die Erfindung eine Verwendung einer derartigen Einrichtung (1) sowie ein Verfahren zur Einstellung einer bestimmten Betriebsposition einer Vorrichtungskomponente (2).

## Beschreibung

Die Erfindung betrifft eine Einrichtung zur Einstellung einer bestimmten Betriebsposition einer Vorrichtungskomponente wie einer Drahtzuführung einer Schweißanlage, wobei die Vorrichtungskomponente zur Einstellung der bestimmten Betriebsposition bewegbar, insbesondere linear verschiebbar, und nach Bewegung in die bestimmte Betriebsposition in dieser für einen Betrieb fixierbar ist.

Des Weiteren betrifft die Erfindung eine Verwendung einer derartigen Einrichtung.

Schließlich betrifft die Erfindung ein Verfahren zur Einstellung einer bestimmten Betriebsposition einer Vorrichtungskomponente wie einer Drahtzuführung einer Schweißanlage, wobei die Vorrichtungskomponente in die bestimmte Betriebsposition bewegt, insbesondere linear verschoben, und danach in der bestimmten Betriebsposition für einen Betrieb fixiert wird.

Bei Produktionsanlagen, welche für verschiedene Produkte ausgelegt sind, ist es bei der Umstellung auf ein anderes herzustellendes Produkt in der Regel erforderlich, die Produktionsvorrichtung entsprechend zu adaptieren oder gegebenenfalls auch umzubauen. Für eine effiziente Fertigung wird dabei darauf Wert gelegt, dass ein entsprechender Umstellungsprozess auf ein anderes zu fertigendes Produkt nicht nur zuverlässig ist, sondern auch möglichst rasch durchgeführt werden kann. Je kürzer Umrüst- oder Adaptierungszeiten sind, umso zeiteffizienter können Produkte hergestellt werden.

Ein Beispiel hierfür sind Schweißanlagen, welche zur Herstellung von Gittern eingesetzt werden. Bei den Gittern kann es sich dabei um Bewehrungsmatten, Matten für Zäune oder dergleichen handeln. Eine Fertigung erfolgt dabei in der Regel quasi-kontinuierlich, wobei Längsdrähte normal zu den Querdrähten zugeführt und mit diesen verschweißt werden. Hierbei wird jeweils ein Bündel von Längsdrähten mit einem einzelnen Querdraht gleichzeitig verschweißt. Die exakte Geometrie wird üblicherweise von einem Kunden vorgegeben, welcher einen bestimmten Mattentyp in Bezug auf die Dimensionierungen fordert. Da die Losgrößen eher klein sind, muss der Betreiber der Schweißanlage dieselbe häufig auf ein neues Produkt umrüsten. Dies betrifft die Längsdrahtzuführungen, welche quer zur Zuführrichtung der Längsdrähte linear verschiebbar sind, sodass ein Längsdrahtabstand für einen bestimmten Mattentyp eingestellt werden kann. Hierfür werden die Längsdrahtzuführungen von einer fixen Position gelöst und in gewünschte Positionen verschoben. Diese Umstellung soll möglichst rasch und präzise erfolgen.

Da die entsprechenden Umrüstzeiten wesentlich die Anlageneffizienz bestimmen, wurden bereits verschiedene Ansätze entwickelt, eine möglichst rasche und präzise Umrüstung zu ermöglichen. Ein erster Ansatz besteht darin, automatische Stelleinheiten einzusetzen, welche elektrisch, hydraulisch oder pneumatisch betrieben werden können. Derartige Stelleinheiten sind allerdings relativ aufwendig und anfällig für Störungen, insbesondere wenn zur Positionierung auch optische Elemente wie beispielsweise Laser erforderlich sind. Darüber hinaus sind derartige Stelleinheiten auch relativ anfällig für Verschmutzungen, die beim Betrieb von Schweißanlagen nicht ausbleiben. Ein noch weiteres Problem ergibt sich dadurch, dass die Stelleinheiten zwar grundsätzlich automatisiert betrieben werden können, allerdings bei neuen Geometrien eine zusätzliche Programmierung erfordern, die regelmäßig einen hohen Aufwand mit sich bringt.

In einem weiteren Ansatz ist versucht worden, optische Systeme als Hilfen für die Positionierung von Längsdrahtzuführungen einzusetzen. Wie auch bei ausschließlich automatisierten Stelleinheiten ergibt sich das Problem einer hohen Empfindlichkeit gegen Verschmutzungen. Darüber hinaus lassen entsprechende Sensorsysteme auf einer Linearachse üblicherweise nur die Umstellung durch einen einzigen Bediener zu, was ein zeitlimitierender Faktor ist. Können nämlich zwei oder gegebenenfalls auch mehrere Personen den Umstellprozess gleichzeitig bearbeiten, ergibt sich eine entsprechende Zeitreduktion.

Als weiterer Ansatz sind Maßleisten im Einsatz, die sich allerdings als wenig tauglich herausgestellt haben. Bei diesen muss das Personal entweder die erforderlichen Markierungen notieren oder abfotografieren oder es ist ein zusätzliches elektronisches Hilfsmittel erforderlich, welches an der Maßleiste die jeweilige Einstellposition anzeigt, die erreicht werden soll. Dies ist umständlich und erfordert zudem einen relativ hohen Zeitaufwand bei der Umstellung.

Aufgabe der Erfindung ist es, eine Einrichtung der eingangs genannten Art anzugeben, mit welcher die vorbestimmte Betriebsposition einer zu verstellenden Vorrichtungskomponente rasch und präzise eingestellt werden kann.

Ein weiteres Ziel der Erfindung ist es, eine Verwendung einer derartigen Einrichtung darzustellen.

Ein noch weiteres Ziel der Erfindung ist es, ein Verfahren der eingangs genannten Art derart weiterzubilden, dass eine Vorrichtungskomponente schnell und präzise in eine gewünschte Betriebsposition bringbar ist.

Die Aufgabe der Erfindung wird gelöst, wenn eine Einrichtung der eingangs genannten Art Folgendes umfasst:
- ein Positionierelement, das eine veränderbare Oberfläche aufweist, auf welcher die bestimmte Betriebsposition für den Betrieb vorgegeben werden kann;
- eine Einstellhilfe, die zumindest einen mit der veränderbaren Oberfläche des Positionierelementes zusammenwirkenden Bereich aufweist und die zur Anlage an der Vorrichtungskomponente ausgebildet ist.

Ein mit der Erfindung erzielter Vorteil ist insbesondere darin zu sehen, dass die Vorrichtungskomponente rasch und mit hoher Genauigkeit in eine gewünschte Position bringbar ist. Bei der Vorrichtungskomponente kann es sich beispielsweise um eine Vorrichtungskomponente einer Schweißanlage oder -maschine handeln, beispielsweise eine Drahtzuführung, insbesondere Längsdrahtzuführung, aber auch andere Komponenten, die entlang einer Geraden linear verschiebbar und an einer vorbestimmten Position arretierbar sind, beispielsweise auch Schweißköpfe. Darüber hinaus lässt sich das erfindungsgemäße Konzept auch auf beliebige andere Justierzwecke anwenden, bei welchen eine längsverschiebliche Vorrichtungskomponente zunächst in eine Betriebs- bzw. Sollposition zu bringen und danach in dieser für den Betrieb zu fixieren ist.

Bei einer erfindungsgemäßen Einrichtung weist das Positionierelement eine veränderbare Oberfläche auf. Die veränderbare Oberfläche kann genutzt werden, um auf dieser eine bestimmte Betriebsposition für den Betrieb mittelbar vorzugeben. Mit anderen Worten wird auf dem Positionierelement die Einstellung für die Umstellung bzw. Umrüstung einer Vorrichtungskomponente eingestellt. Sind mehrere Vorrichtungskomponenten umzustellen, können selbstverständlich mehrere entsprechende Betriebspositionen auf einem einzelnen Positionierelement durch Veränderung der Oberfläche eingestellt werden. Darüber hinaus umfasst die Einrichtung eine Einstellhilfe, deren Zweck es ist, bereichsweise mit der veränderbaren Oberfläche des Positionierelementes zusammenzuwirken und zur Anlage an der Vorrichtungskomponente zu kommen. Mit dem Positionierelement wird somit die nächste Soll- bzw. Betriebsposition festgelegt, allerdings würde dies alleine bloß eine Umstellung auf Sicht ermöglichen. Mit der Einstellhilfe wird eine Verbindung zwischen der positionsbestimmenden Oberfläche des Positionierelementes einerseits und der Vorrichtungskomponente andererseits geschaffen. Da es sich hierbei ausschließlich um eine mechanische Verbindung handeln kann, wird die mittelbar vom Positionierelement vorgegebene, vorbestimmte Betriebsposition mit der Einstellhilfe auf die Vorrichtungskomponente oder gegebenenfalls mehrere Vorrichtungskomponenten umgesetzt. Hierfür ist die Einstellhilfe bevorzugt so ausgebildet, dass diese sowohl mit dem Positionierelement als auch mit der Vorrichtungskomponente in Bereichen kraft- und/oder formschlüssig in Kontakt gebracht werden kann.

Ein mit der Erfindung erzielter Vorteil ist insbesondere darin zu sehen, dass mit der Einstellhilfe insbesondere bei Schweißanlagen oder -maschinen, aber auch anderen Anlagen, welche Vorrichtungskomponenten aufweisen, die längsverschiebbar gehalten und entlang einer entsprechenden Längsachse für einen Betrieb arretierbar bzw. fixierbar sind, schnell, zuverlässig und genau umgestellt werden kann. Das Positionierelement kann bereits vorbereitet werden, während die Anlage bzw. Maschine noch mit der Produktion eines bestimmten Produktes ausgelastet ist. Sobald ein Produktwechsel erfolgt, kann das Positionierelement unverzüglich zur Umrüstung eingesetzt werden. Bei einem neuerlichen Wechsel wiederholt sich dies, sodass das Positionierelement bereits während eines laufenden Produktionszyklus für den nächsten vorbereitet werden kann bzw. wird. Darüber hinaus weist die Einrichtung den Vorteil der Zuverlässigkeit auf, da durch die Geometrie der Oberfläche und deren Einstellung menschliches Versagen während des Umstellvorganges in diesem Zusammenhang ausgeschlossen oder zumindest nahezu ausgeschlossen ist. Da die veränderbare Oberfläche die Betriebsposition(en) vorgibt und diese mit der Einstellhilfe quasi auf die Vorrichtungskomponente übertragen wird, sind Fehlerquellen vermieden. Darüber hinaus liefert die Einrichtung auch genaue Ergebnisse bei der Umstellung, insbesondere wenn ein kraft- und/oder formschlüssiger Kontakt zwischen den einzelnen Elementen entlang der Linie Positionierelement-Einstellhilfe-Vorrichtungskomponente gegeben ist. Insbesondere bei Anlagen zur Erstellung geschweißter Matten äußerst sich dies auch in einer außerordentlich hohen Produktgüte, da mit besonders geringen Toleranzen gefertigt werden kann. Neben einer Zeitersparnis von bis zu 100 % ergibt sich somit auch ein am Produkt sichtbarer Vorteil. Ein noch weiterer Vorteil einer erfindungsgemäßen Vorrichtung liegt darin, dass diese bei Bedarf ausschließlich aus miteinander zusammenwirkenden mechanischen Strukturteilen bestehen kann, wodurch die Einrichtung besonders robust ist.

Bevorzugt ist vorgesehen, dass die Vorrichtungskomponente durch Anlegen der Einstellhilfe an die Oberfläche und an die Vorrichtungskomponente in die bestimmte Betriebsposition bringbar ist. Die Einstellhilfe ist hierfür so ausgebildet, dass diese bei Kontaktierung des Positionierelementes und somit einer bereits gegebenen Fixierung die Vorrichtungskomponente dennoch innerhalb eines gewissen Spiels erfassen kann. Hierfür kann die Einstellhilfe in Bezug auf die Vorrichtungskomponente mit einem konisch verbreiterten Anlagebereich ausgebildet sein. Bei Anlegen der Einstellhilfe gibt dann die Vorrichtungskomponente, die zweckmäßigerweise in entsprechenden Bereichen korrespondierende Oberflächen aufweist, unter Bewegung in eine Soll- bzw. Betriebsposition nach. Anschließend kann die Vorrichtungskomponente dann für den weiteren Betrieb fixiert werden.

Es ist grundsätzlich nicht erforderlich, dass das Positionierelement an einer Vorrichtung, welche die zu verstellenden Vorrichtungskomponenten aufweist, fixiert ist, allerdings kann hierfür an der Vorrichtung ein eigener Bereich vorgesehen sein. Eine lösbare Fixierung des Positionierelementes bringt für die Justage der einzurichtenden Vorrichtungskomponenten den Vorteil, dass Positionierungsfehler vermieden sind. Gleichwohl ist eine lösbare Befestigung des Positionierelementes nicht zwingend erforderlich, um eine Einstellung vorzunehmen.

Das Positionierelement kann grundsätzlich eine beliebige Form aufweisen. Bevorzugt ist das Positionierelement länglich ausgebildet, da in der Regel mehrere Vorrichtungskomponenten ein- bzw. umzustellen sind und die jeweiligen Positionen dann der Länge nach (in Übereinstimmung mit der Längsverschiebbarkeit und der entsprechenden Längsachse für die Verschiebung der Vorrichtungskomponenten) eingestellt werden können. Das Positionierelement ist dann parallel zur Längsachse ausgerichtet, entlang welcher die Vorrichtungskomponenten verschoben bzw. eingerichtet werden. Hierfür ist die Oberfläche des Positionierelementes an einer Vielzahl von Bereichen positionsbestimmend ausgebildet.

Das Positionierelement, das wie erwähnt beispielsweise als Leiste ausgebildet sein kann, weist für die Zwecke der Festlegung der Betriebspositionen eine veränderbare Oberfläche auf. Die Oberfläche kann beispielsweise mit einer Vielzahl von Knöpfen ausgebildet sein, welche entgegen einer Federkraft in die Leiste gedrückt werden können, um so die Oberfläche der Leiste bzw. allgemein des Positionierelementes zu verändern. Auch die umgekehrte Variante ist möglich, nämlich dass einzelne Knöpfe in entsprechenden Vertiefungen gelagert sind und aus dieser Position freigegeben werden können, sodass die Knöpfe vorstehen. Grundsätzlich können beliebige mechanische Systeme zur Anwendung kommen, welche es erlauben, manuell oder gegebenenfalls auch automatisiert die Oberfläche des Positionierelementes so zu verändern, dass mit diesen Positionen der Vorrichtungskomponenten festlegbar sind. Besonders bevorzugt ist es jedoch, wenn das Positionierelement mit einer Vielzahl von Vertiefungen ausgebildet ist, in welche zur Festlegung zumindest einer bestimmten Betriebsposition, vorzugsweise einer Vielzahl bestimmter Betriebspositionen, aus der Oberfläche vorragende Stifte einsetzbar sind. Mit den Stiften werden dann die Positionen für die Vorrichtungen vorgegeben. Dabei kann eine Bestückung erfolgen, während die Anlage arbeitet, sodass bei dem Produktwechsel mit dem neu bestückten Positionierelement sofort ein Wechsel erfolgen kann. Eine andere, weitere Variante besteht darin, dass das Positionierelement eine Vielzahl von variabel aktivierbaren Vertiefungen aufweist, über welche positionsgebend die Position(en) vorgegeben werden, und die Einstellhilfe mit eingreifenden Stiften oder allgemein Vorsprüngen ausgebildet ist, welche in die aktivierten Vertiefungen eingreifen können.

Die erforderliche Einstellhilfe ist möglichst einfach ausgebildet. Vorzugsweise weist die Einstellhilfe einen Griff auf, sodass die Einstellhilfe rasch betätigbar ist.

Die Einstellhilfe kann einen insbesondere länglichen Grundkörper aufweisen, dessen Unterseite bereichsweise an der Vorrichtungskomponente und am Positionierelement zur Anlage bringbar ist. Im Speziellen ist der Grundkörper dann unterhalb des Griffs angeordnet, sodass die Einstellhilfe auf das Positionierelement und die Vorrichtungskomponente aufsetzbar ist. Hierfür kann eine Unterseite der Einstellhilfe konisch auseinanderlaufende Flächen aufweisen, zu welchen konisch zulaufende Flächen der Vorrichtungskomponente korrespondieren. Dadurch rastet die Vorrichtungskomponente, die für die Einstellung der Betriebsposition lösbar und damit längsverschiebbar gehalten ist, selbsttätig ein und wird so in die Soll- bzw. Betriebsposition gebracht, in welcher diese dann für den Betrieb fixiert wird.

Der Grundkörper der Einstellhilfe kann in Seitenansicht als länglich ausgebildeter Körper mit einem anschließend vorzugsweise senkrecht anschließenden Winkelstück vorliegen. Kopfseitig ist dann der Griff montiert. Das Winkelstück dient zum Eingriff mit dem Positionierelement, während der länglich gehaltene Teil des Grundkörpers mit der Vorrichtungskomponente in Eingriff bringbar ist. Es erfolgt jeweils eine kraft- und/oder formschlüssige Kontaktierung, bevorzugt ein bereichsweiser Formschluss. Im Winkelstück kann eine Öffnung zur Durchführung eines Werkzeuges vorgesehen sein.

Das Positionierelement und die Einstellhilfe liegen bevorzugt voneinander getrennt vor. Die Einstellhilfe kann wie erläutert als manuell leicht hantierbares Teil mit einem Griff ausgebildet sein. Das Positionierelement hingegen weist eine veränderbare Oberfläche auf und ist regelmäßig für den nachfolgenden Produktionsprozess zu adaptieren.

Wenngleich eine erfindungsgemäße Vorrichtung grundsätzlich beliebig Einsatz finden kann, sobald eine oder mehrere Vorrichtungskomponenten, die entlang einer Längsachse angeordnet sind, für einen Produktionsprozess in eine bestimmte Längsposition gebracht werden sollen, ergibt sich eine bevorzugte Anwendung für eine Schweißanlage für Drahtgitter. Drahtgitter ist in diesem Zusammenhang allgemein zu verstehen, insbesondere sind jegliche Produkte aus verschweißten Längsdrähten und Querdrähten umfasst. Insbesondere ist die Einrichtung zur Einstellung von Drahtzuführungen geeignet, insbesondere Längsdrahtzuführungen.

Entsprechend den dargestellten Vorteilen betrifft die Erfindung in einem weiteren Aspekt eine Vorrichtung, insbesondere eine Schweißanlage, welche eine erfindungsgemäße Einrichtung aufweist. Bei einer Schweißanlage ergibt sich mit einer entsprechenden Einrichtung der Vorteil, dass eine schnelle, zuverlässige und genaue Umrüstung auf ein nachfolgendes Produkt, beispielsweise eine Bewehrungsmatte mit einer anderen Längsteilung, erfolgen kann. Auch können gleichzeitig mehrere Personen die Umstellung vornehmen, was eine zusätzliche Zeitersparnis darstellen kann.

Die verfahrensmäßige Aufgabe der Erfindung wird gelöst, wenn bei einem Verfahren der eingangs genannten Art eine veränderbare Oberfläche eines Positionierelementes auf die bestimmte Betriebsposition für den Betrieb eingestellt wird und eine Einstellhilfe mit der veränderbaren Oberfläche des Positionierelementes und der Vorrichtungskomponente zur Anlage gebracht wird, sodass die Vorrichtungskomponente in die Betriebsposition bewegt wird.

Das Positionierelement kann vor der Bewegung der Vorrichtungskomponente fixiert werden, insbesondere lösbar fixiert. Das Positionierelement wird hierfür an der Vorrichtung mit entsprechenden Befestigungsmitteln lösbar angeordnet.

Besonders bevorzugt ist es, dass zwischen den Positionierelementen der Einstellhilfe sowie der Einstellhilfe und der Vorrichtungskomponente jeweils ein Kraft- und/oder Formschluss hergestellt wird. Insbesondere kann es ausreichend sein, jeweils einen Formschluss herzustellen. Über den Formschluss ist eine schnelle und genaue Einstellung der Vorrichtungskomponente in die gewünschte Betriebsposition erzielbar.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine Seitenansicht einer Einstellhilfe;
Fig. 2 eine stirnseitige Ansicht der Einstellhilfe aus Fig. 1;
Fig. 3 eine Ansicht von unten auf die Einstellhilfe aus Fig. 1;
Fig. 4 einen Ausschnitt eines Positionierelementes;
Fig. 5 eine Seitenansicht des Positionierelementes aus Fig. 4;
Fig. 6 einen Teil einer Schweißanlage mit montiertem Positionierelement und Einstellhilfe während eines Positioniervorganges;
Fig. 7 die Situation gemäß Fig. 6 beim Positioniervorgang mit aufgesetzter Einstellhilfe;
Fig. 8 einen Teil einer Schweißanlage mit mehreren Vorrichtungskomponenten in Form von Drahtzuführungen und aufgesetzter Einstellhilfe;
Fig. 9 die Situation gemäß Fig. 8 mit einer anderen Einstellung.

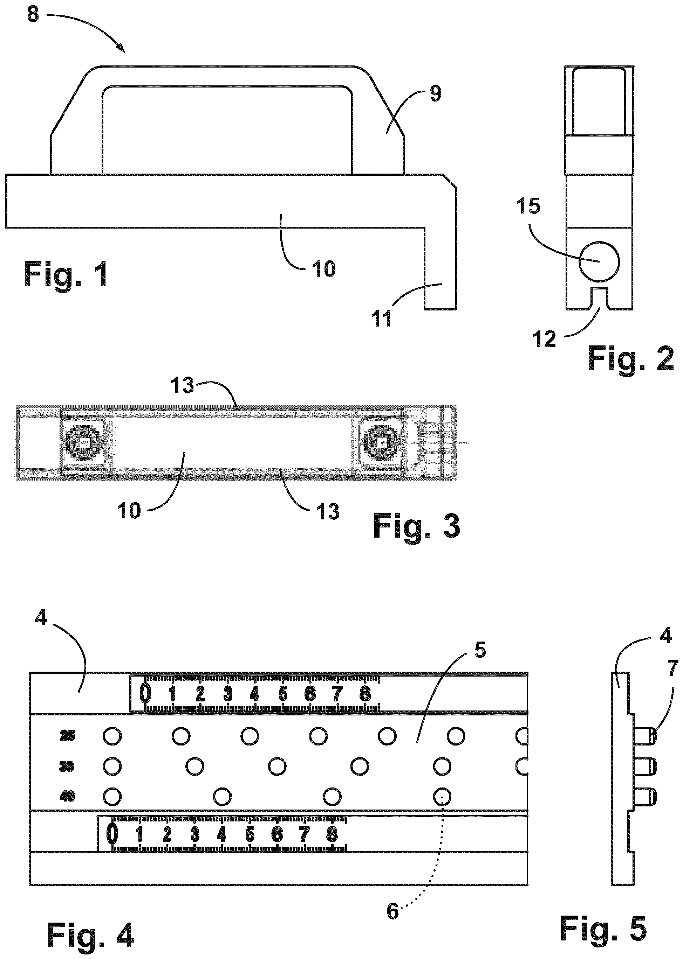

In Fig. 1 bis Fig. 8 ist eine erste Ausführungsvariante der Erfindung dargestellt. In Fig. 1 bis Fig. 5 ist eine erfindungsgemäße Einrichtung 1 ersichtlich. Die Einrichtung 1 umfasst eine Einstellhilfe 8, die in Fig. 1 bis Fig. 3 dargestellt ist sowie ein Positionierelement 4, welches in Fig. 4 und Fig. 5 dargestellt ist.

Die Einstellhilfe 8 weist gemäß Fig. 1 bis Fig. 3 einen zweiteiligen Aufbau auf. Kopfseitig umfasst die Einstellhilfe 8 einen Griff 9, mit welchem die Einstellhilfe 8 durch einen Benutzer leicht greifbar ist. Unterhalb des Griffes 9 ist ein Grundkörper 10 angeordnet. Der Grundkörper 10 ist mit dem Griff 9 beispielsweise verschraubt, wie dies in der Ansicht von unten in Fig. 3 ersichtlich ist. Der Grundkörper 10 ist länglich ausgebildet und weist an einem Ende ein angewinkeltes Endstück 11 auf. Das Endstück 11 ist endseitig mit einer Ausnehmung 12 ausgebildet, die in Fig. 2 ersichtlich ist und deren Funktion noch erläutert werden wird. Des Weiteren kann eine Öffnung 15 zur Durchführung eines Werkzeuges vorgesehen sein, insbesondere um eine Vorrichtungskomponente 2 in einer Betriebsposition fixieren zu können.

Der längliche Grundkörper 10 ist an der Unterseite innenseitig mit abgeschrägten Flächen bzw. Abschrägungen 13 ausgebildet. Diese abgeschrägten Flächen laufen zum Griff 9 hin konisch zu.

Die Einstellhilfe 8 ist ausgebildet, um mit dem in Fig. 4 und Fig. 5 ersichtlichen Positionierelement 4 zusammenzuwirken. Das Positionierelement 4 kann wie dargestellt als Leiste ausgebildet sein, wobei in Fig. 4 lediglich ein Teil der längeren Leiste dargestellt ist. Die Leiste erstreckt sich in der Regel über jenen Bereich, in welchem eine Einstellung von Vorrichtungskomponenten 2 mit der erfindungsgemäßen Einrichtung 1 erforderlich ist. Beispielsweise kann die Leiste eine Länge von mehreren Metern aufweisen.

Wie in Fig. 4 dargestellt ist, weist das Positionierelement 4 bzw. die Leiste eine veränderbare Oberfläche 5 auf. Die Veränderbarkeit der Oberfläche 5 ergibt sich dadurch, dass die Leiste mit einer Vielzahl von Vertiefungen 6 ausgebildet ist, in welche Stifte 7 eingesetzt werden können. Anstelle von Stiften 7 können grundsätzlich auch andere Mittel verwendet werden, welche geeignet sind, in die Vertiefungen 6 eingesetzt zu werden.

Das Positionierelement 4 bzw. die Leiste kann wie dargestellt mehrere Reihen von Vertiefungen 6 aufweisen, die mit Stiften 7 oder anderen Mitteln bestückbar sind. Dies kann beispielsweise genutzt werden, um verschiedene Längenteilungen einstellen zu können. Grundsätzlich ist es aber ausreichend, wenn bereits eine Reihe von Vertiefungen 6 vorliegt, die mit Stiften 7 bestückbar ist. Möglich ist es auch, wie in Fig. 4 ersichtlich, dass zusätzlich ein oder mehrere Maßleisten vorgesehen sind, welche bei einer Einstellung zusätzlich nützlich sein können.

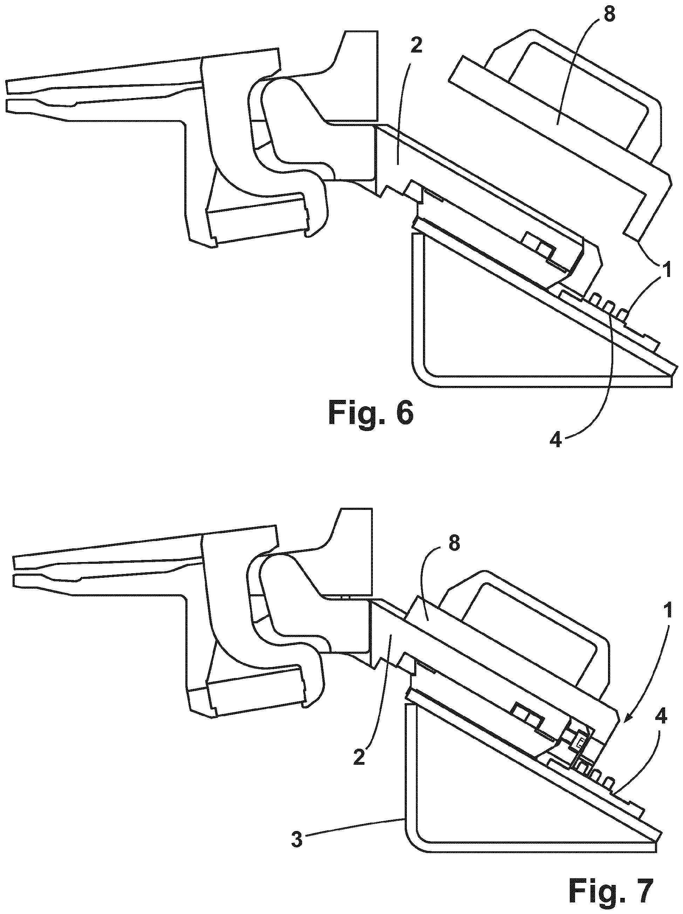

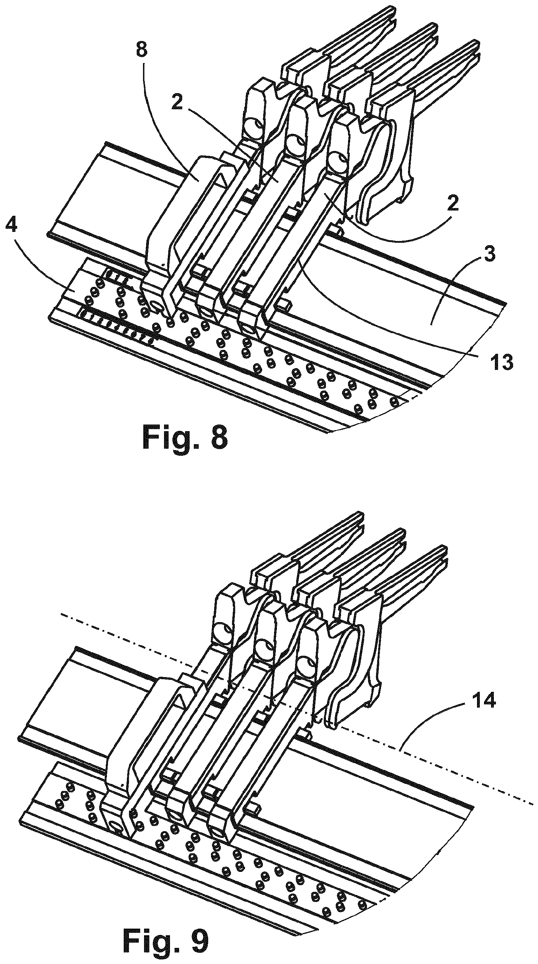

Anhand von Fig. 6 bis Fig. 9 ist die Wirkungsweise der erfindungsgemäßen Einrichtung 1 bei einer Einstellung von Längsdrahtzuführungen einer Schweißanlage 3 näher erläutert. In Fig. 6 und Fig. 7 ist ein Teil einer Schweißanlage 3 in Seitenansicht dargestellt. Ersichtlich ist eine Vorrichtungskomponente 2, die in diesem Fall eine Längsdrahtzuführung darstellt. Hinter der Bildebene ist eine Vielzahl derartiger Längsdrahtzuführungen gegeben, wie diese exemplarisch in Fig. 8 oder Fig. 9 ersichtlich sind. Mit den Längsdrahtzuführungen wird bei der Herstellung eines Gitters Längsdraht zugeführt, der mit Querdrähten verschweißt wird. Hierzu ist es erforderlich, je nach Geometrie des Gitters, dass die Längsdrahtzuführungen entsprechend auf einer Geraden geteilt eingestellt sind. Zu diesem Zweck sind die Längsdrahtzuführungen lösbar befestigt. Für den Prozess der Einstellung einer Betriebsposition können die Längsdrahtzuführungen aus einer arretierten Betriebsposition gelöst und in die gewünschte neue Betriebsposition verschoben werden. Um dies möglichst einfach zu gestalten, ist jede Längsdrahtzuführung vorzugsweise mit lediglich einem Befestigungsmittel wie einer Schraube befestigt. Die Längsdrahtzuführung kann dann rasch gelöst, in die gewünschte Betriebsposition verschoben und in dieser fixiert werden. Sofern es sich um eine andere entsprechend einzustellende Vorrichtungskomponente 2 handelt, trifft dies analog zu.

Wenn es erforderlich ist, auf eine andere Gittergeometrie umzustellen, müssen die Längsdrahtzuführungen positionell verändert werden. Hierfür werden die Längsdrahtzuführungen gelöst, sodass diese entlang einer Längsachse 14, welche quer zur Vorschubrichtung des Längsdrahtes verläuft, verschiebbar sind. Eine Einstellung erfolgt nun erfindungsgemäß mit der hierfür ausgelegten Einrichtung 1 mit dem Positionierelement 4 und der Einstellhilfe 8. Das Positionierelement 4 ist hierfür an der Schweißanlage 3 parallel zur Längsachse 14 angeordnet bzw. lösbar fixiert. Die Sollpositionen für die vorbestimmte Betriebsposition sind am Positionierelement 4 indirekt durch entsprechend gesetzte Stifte 7 vorgegeben. Es wird nun die Einstellhilfe 8 mit der Ausnehmung 12 auf das Positionierelement 4 sowie die einzustellende Längsdrahtzuführung aufgesetzt. Dabei umfasst die Einstellhilfe 8 im Bereich der Ausnehmung 12 formschlüssig den entsprechenden Stift 7 auf der Positionierleiste. Gleichzeitig oder zeitlich versetzt wird die Einstellhilfe 8 an die gelöste Vorrichtungskomponente 2 in Form der Längsdrahtzuführung aufgesetzt, sodass sich sowohl im Zusammenwirken der Einstellhilfe 8 mit dem Positionierelement 4 bzw. der Leiste und der Längsdrahtzuführung ein Formschluss ergibt. Dies ist insbesondere in Bezug auf die Längsdrahtzuführung auch dadurch erleichtert, dass die Längsdrahtzuführung abgeschrägte Flächen aufweist, welche jenen an der Innenseite der Einstellhilfe 8 entsprechen. Dadurch kommt es gleichzeitig zur gewünschten Verschiebung der Längsdrahtzuführung in die Sollposition bzw. vorbestimmte Betriebsposition. In dieser kann das Längsdrahtzuführungselement für den folgenden Betrieb fixiert werden. Während dieses Betriebes kann dann das Positionierelement 4 bzw. die Leiste bereits für den übernächsten Produktionslauf vorbereitet werden. Möglich ist es auch, mit mehreren Leisten zu arbeiten, sodass eine erste Leiste zunächst noch an der Schweißanlage 3 verbleibt, während die andere, zweite Leiste für den nächsten Produktionslauf eingestellt wird. Sobald dann ein Umrüsten zu erfolgen hat, werden die Leisten getauscht. Dadurch kann weiter Zeit eingespart werden. Auch können mit mehreren Einstellhilfen 8 mehrere Personen gleichzeitig die Umstellung vornehmen.

In der ersten Ausführungsvariante sind die für eine Einstellung der Betriebsposition der einzelnen Längsdrahtzuführungen erforderlichen Mittel ausschließlich mechanischer Natur und erfordern keine Bestromung oder Antriebsmittel. Möglich ist in einer zweiten Ausführungsvariante aber auch ein halbautomatischer Betrieb. Hierfür kann das Positionierelement 4 so ausgebildet sein, dass die Oberfläche automatisiert veränderbar ist, beispielsweise durch eine geeignete Ansteuerung von Stiften 7, die bei Bedarf ausgefahren werden. Diese Variante ist zwar etwas komplexer und erfordert mehr mechanischen Aufwand für die Ansteuerung der einzelnen Stifte 7 oder anderer geeigneter Mittel zur Veränderung der Oberfläche, bietet aber den Vorteil, dass das Positionierelement 4 dauerhaft an der Vorrichtung bzw. im Ausführungsbeispiel an der Schweißanlage 3 verbleiben kann. Möglich ist es auch, dass das Positionierelement 4 entsprechend in die Schweißanlage 3 integriert ist. Ein anderer Vorteil ergibt sich dadurch, dass es in diesem Fall auch möglich ist, die kundenseitigen Anforderungen bzw. ein bestimmtes Gitterprofil digital einzulesen und auf Basis eines entsprechenden Datensatzes das Positionierelement 4 entsprechend anzusteuern bzw. die Oberfläche entsprechend geeignet auszubilden. Im Anschluss kann wiederum eine manuelle Einstellung mit Hilfe der Einstellhilfe 8 erfolgen.

In einer dritten Ausführungsvariante kann die erfindungsgemäße Einrichtung 1
voll automatisiert arbeiten. In diesem Fall wird das Positionierelement 4 automatisiert eingestellt und auch die Einstellhilfe 8 automatisch betrieben. Hierfür kann die Einstellhilfe 8 entlang der Längsachse 14 verschiebbar gelagert sein. Für eine Positionsfindung in Bezug auf die Oberfläche des Positionierelementes 4 einerseits sowie die zu verschiebende Vorrichtungskomponente 2 können geeignete optische Sensoren vorgesehen sein. Auch eine Positionsfindung auf Basis magnetischer oder elektrischer Felder ist in diesem Fall möglich.

Wenngleich die zweite halbautomatisierte Ausführungsvariante sowie die dritte vollautomatisierte Ausführungsvariante mögliche Alternativen darstellen, hat sich doch die erste Ausführungsvariante mit der manuellen Betätigung als robust und im Betrieb besonders praktikabel herausgestellt. Darüber hinaus ergibt sich bei minimierter Fehlerquote auch kein Wartungsbedarf, was für die Vorzüge dieser Ausführungsvariante spricht.

## Patentansprüche

1. Einrichtung (1) zur Einstellung einer bestimmten Betriebsposition einer Vorrichtungskomponente (2) wie einer Drahtzuführung einer Schweißanlage (3), wobei die Vorrichtungskomponente (2) zur Einstellung der bestimmten Betriebsposition bewegbar, insbesondere linear verschiebbar, und nach Bewegung in die bestimmte Betriebsposition in dieser für einen Betrieb fixierbar ist, **dadurch gekennzeichnet, dass** die Einrichtung (1) umfasst:
- ein Positionierelement (4), das eine veränderbare Oberfläche (5) aufweist, auf welcher die bestimmte Betriebsposition für den Betrieb vorgegeben werden kann;
- eine Einstellhilfe (8), die zumindest einen mit der veränderbaren Oberfläche (5) des Positionierelementes (4) zusammenwirkenden Bereich aufweist und die zur Anlage an der Vorrichtungskomponente (2) ausgebildet ist.

2. Einrichtung (1) nach Anspruch 1, **dadurch gekennzeichnet, dass** die Vorrichtungskomponente (2) durch Anlegen der Einstellhilfe (8) an die veränderbare Oberfläche (5) und an die Vorrichtungskomponente (2) in die bestimmte Betriebsposition bringbar ist.

3. Einrichtung (1) nach Anspruch 1 oder 2, **dadurch gekennzeichnet, dass** das Positionierelement (4) zur lösbaren Befestigung an einer Vorrichtung ausgebildet ist.

4. Einrichtung (1) nach einem der Ansprüche 1 bis 3, **dadurch gekennzeichnet, dass** das Positionierelement (4) als Leiste ausgebildet ist.

5. Einrichtung (1) nach einem der Ansprüche 1 bis 4, **dadurch gekennzeichnet, dass** die Betriebsposition am Positionierelement (4) wahlweise definierbar ist.

6. Einrichtung (1) nach einem der Ansprüche 1 bis 5, **dadurch gekennzeichnet, dass** das Positionierelement (4) mit einer Vielzahl von Vertiefungen (6) ausgebildet ist, in welche zur Festlegung zumindest einer bestimmten Betriebsposition aus der Oberfläche vorragende Stifte (7) einsetzbar sind.

7. Einrichtung (1) nach einem der Ansprüche 1 bis 6, **dadurch gekennzeichnet, dass** die Einstellhilfe (8) mit einem Griff (9) ausgebildet ist.

8. Einrichtung (1) nach Anspruch 7, **dadurch gekennzeichnet, dass** die Einstellhilfe (8) einen insbesondere länglichen Grundkörper (10) aufweist, dessen Unterseite bereichsweise an der Vorrichtungskomponente (2) und am Positionierelement (4) zur Anlage bringbar ist.

9. Einrichtung (1) nach einem der Ansprüche 1 bis 8, **dadurch gekennzeichnet, dass** das Positionierelement (4) und die Einstellhilfe (8) voneinander getrennt vorliegen.

10. Verwendung einer Einrichtung (1) nach einem der Ansprüche 1 bis 9 für eine Schweißanlage (3) für Drahtgitter.

11. Vorrichtung, insbesondere Schweißanlage (3), aufweisend mindestens eine Einrichtung (1) nach einem der Ansprüche 1 bis 9.

12. Verfahren zur Einstellung einer bestimmten Betriebsposition einer Vorrichtungskomponente (2) wie einer Drahtzuführung einer Schweißanlage (3), wobei die Vorrichtungskomponente (2) in die bestimmte Betriebsposition bewegt, insbesondere linear verschoben, und danach in der bestimmten Betriebsposition für einen Betrieb fixiert wird, **dadurch gekennzeichnet, dass** eine veränderbare Oberfläche (5) eines Positionierelementes (4) auf die bestimmte Betriebsposition für den Betrieb eingestellt wird und eine Einstellhilfe (8) mit der veränderbaren Oberfläche (5) des Positionierelementes (4) und der Vorrichtungskomponente (2) zur Anlage gebracht wird, sodass die Vorrichtungskomponente (2) in die Betriebsposition bewegt wird.

13. Verfahren nach Anspruch 12, **dadurch gekennzeichnet, dass** das Positionierelement (4) vor der Bewegung der Vorrichtungskomponente (2) fixiert wird, insbesondere lösbar fixiert wird.

14. Verfahren nach Anspruch 12 oder 13, **dadurch gekennzeichnet, dass** zwischen dem Positionierelement (4) und der Einstellhilfe (8) sowie der Einstellhilfe (8) und der Vorrichtungskomponente (2) jeweils ein Kraft- und/oder Formschluss hergestellt wird.
